Europäisches Patentamt

European Patent Office

Office européen des brevets

(11) Veröffentlichungsnummer: **0 433 606 A1**

# (12) EUROPÄISCHE PATENTANMELDUNG

(21) Anmeldenummer: 90120360.4

(22) Anmeldetag: 24.10.90

(51) Int. Cl.⁵: **B60G 13/14**, B60K 25/10,
B60G 17/06

Die Bezeichnung der Erfindung wurde geändert (Richtlinien für die Prüfung im EPA, A-III, 7.3).

(30) Priorität: 15.11.89 DE 3937987

(43) Veröffentlichungstag der Anmeldung:
26.06.91 Patentblatt 91/26

(84) Benannte Vertragsstaaten:
DE FR GB IT SE

(71) Anmelder: ROBERT BOSCH GmbH
Postfach 10 60 50
W-7000 Stuttgart 10(DE)

(72) Erfinder: Rubel, Erich, Dipl.-Ing.
Stammheimer Strasse 53
W-7140 Ludwigsburg(DE)
Erfinder: Mettner, Michael, Dr.-Ing.
Waliser Strasse 4/1
W-7140 Ludwigsburg(DE)

(54) Fahrzeugfederung.

(57) Es wird eine Fahrzeugfederung mit einem sogenannten vollaktiven Federbein (14) mit zwei Mechanik/Hydraulik-Wandlern (6, 10) vorgeschlagen, wobei das spezifische Förder/Schluck-Volumen mindestens eines Wandlers (6, 10) veränderbar ist. Dadurch können alle Schalt-, Druckregel- und Drosselventile entfallen und es ergibt sich ein Minimum an Energiebedarf.

Die Fahrzeugfederung ist insbesondere für Kraftfahrzeuge bestimmt.

FIG.2

EP 0 433 606 A1

## FAHRZEUGFEDERUNG I

Stand der Technik

Die Erfindung geht aus von einer Fahrzeugfederung nach der Gattung des Hauptanspruchs. Es ist bereits eine Fahrzeugfederung bekannt, bei der zwischen einer Fahrzeugmasse und einer Radmasse ein zwischen den beiden Massen liegendes Federbein eingebaut ist.

Die bekannte Fahrzeugfederung enthält neben dem Federbein als wesentliche Bauteile eine Pumpe, ein Steuergerät, Sensoren und ein betätigbares Wegeventil. Mit Hilfe der Pumpe wird im Zulauf zu dem Wegeventil ein erforderlicher Druck bereitgehalten. Das Federbein enthält einen Arbeitszylinder mit zwei Arbeitsräumen. Über das betätigbare Ventil kann ein jeweiliger Druck in den Arbeitsräumen je nach Bedarf gesteuert werden. Damit ist das Verhalten des Federbeines in weiten Grenzen beliebig zu beeinflussen. Damit auch bei einer sehr unebenen Fahrbahn das Federbein ausreichend schnell in gewünschter Weise arbeiten kann, muß eine ausreichend große Pumpenleistung installiert werden. Bei einer sehr ebenen Fahrbahn sind zum Betreiben des Federbeines nur kleine Fördermengen erforderlich. Die von der Pumpe zuviel geförderte Menge wird unter hohem Druck in den Tank zurückgefördert. Dies bedeutet auch bei relativ ebener Fahrbahn den ständigen Verbrauch einer großen Leistung.

In dem betätigbaren Ventil entsteht ein Druckabfall und damit ein Leistungsverlust, d. h. hineingesteckte Energie wird in nicht mehr nutzbare Wärmeenergie umgesetzt. Die zum Ausfedern des Federbeines erforderliche Energiemenge kann beim Einfedern nicht mehr nutzbringend zurückgewonnen werden, sondern wird an der Drosselstelle in thermische Energie, d. h. Wärme umgesetzt.

Vorteile der Erfindung

Demgegenüber weist die mit dem kennzeichnenden Merkmal des Hauptanspruchs ausgestattete Fahrzeugfederung den Vorteil auf, daß von der Antriebsmaschine insgesamt nur so viel Energie abverlangt wird, wie zum Betreiben des Federbeines erforderlich ist.

Durch die in den Unteransprüchen aufgeführten Maßnahmen sind vorteilhafte Weiterbildungen und Verbesserungen der im Hauptanspruch angegebenen Fahrzeugfederung möglich.

Ist der erste Wandler eine Pumpe/Motor-Einheit mit veränderbarem, spezifischem Volumen, dann kann mindestens ein Teil der von der Antriebsmaschine während einer Ausfederung des Federbeines aufgebrachte Energie beim Einfedern des Federbeines wieder an die Antriebsmaschine zurückgegeben werden.

Zeichnung

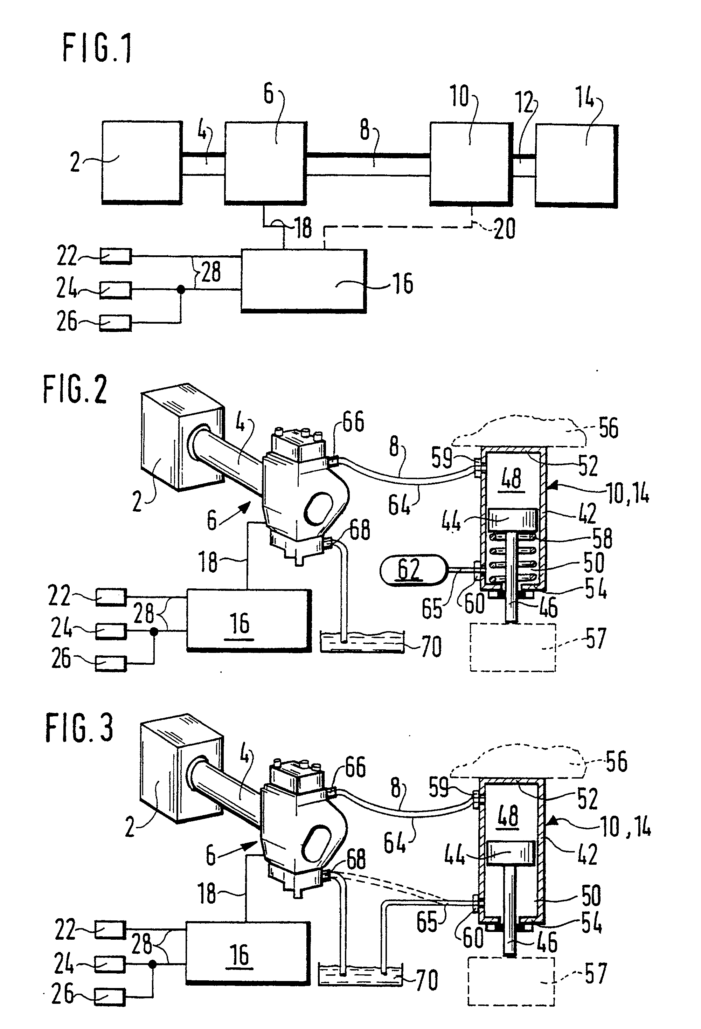

Vier Ausführungsbeispiele der Erfindung sind in der Zeichnung vereinfacht dargestellt und in der nachfolgenden Beschreibung näher erläutert. Es zeigen Figur 1 ein Systembild der Erfindung und die Figuren 2 bis 5 je ein Ausführungsbeispiel der Fahrzeugfederung.

Beschreibung der Ausführungsbeispiele

Die Figur 1 zeigt die erfindungsgemäße Fahrzeugfederung in einem Systembild. Dieses zeigt im wesentlichen folgende symbolisch dargestellten Einzelheiten: Eine Antriebsmaschine 2, eine erste mechanische Verbindung 4, einen ersten Wandler 6, eine hydraulische Verbindung 8, einen zweiten Wandler 10, eine zweite mechanische Verbindung 12, ein Federbein 14, eine Steuerelektronik 16, eine erste Steuerleitung 18, gegebenenfalls eine zweite Steuerleitung 20, eine Stromversorgungseinheit 22, einen Sensor 24, einen Sollwert-Geber 26 und mehrere Kabel 28.

Die Antriebsmaschine 2 ist z. B. ein Dieselmotor, ein Otto-Motor, ein Elektromotor oder dergleichen. Der erste Wandler 6 ist über die erste mechanische Verbindung 4 mit der Antriebsmaschine 2 verbunden. Die erste mechanische Verbindung 4 ist z. B. eine Verbindungswelle, ein Getriebe, ein System aus Keilriemen und Keilrad oder Zahnriemen und Zahnriemenrad usw. Über die erste mechanische Verbindung 4 kann eine in mechanischer Form vorliegende Energie von der Antriebsmaschine 2 auf den ersten Wandler 6 übertragen werden. Der erste Wandler 6 ist z. B. eine Pumpe/Motor-Einheit. Damit kann zumindest ein Teil der von der Antriebsmaschine 2 kommenden mechanischen Energie in hydraulische Energie umgewandelt und an die hydraulische Verbindung 8 abgegeben werden und es kann auch eine von der hydraulischen Verbindung 8 kommende hydraulische Energie umgeformt und über die erste mechanische Verbindung 4 an die Antriebsmaschine 2 abgegeben werden.

Der zweite hydraulische Wandler 10 kann die von der hydraulischen Verbindung 8 kommende hydraulische Energie in eine mechanische Energie umformen und über die zweite mechanische Verbindung 12 an das Federbein 14 abgeben. Der zweite Wandler 10 ist darüber hinaus in der Lage eine von dem Federbein 14 über die zweite mechanische Verbindung 12 kommende Energie in hydraulische Energie zurückzuwandeln und an die hydraulische Verbindung 8 abzugeben.

Der erste Wandler 6 ist über die erste Steuerleitung 18 und der zweite Wandler 10 ist gegebenenfalls über die zweite Steuerleitung 20 mit der Steuerelektronik 16 verbunden. Über die Steuerleitungen 18, 20 können die Wandler 6, 10 von der Steuerelektronik 16 angesteuert werden. Von der Stromversorgungseinheit 22 wird die Steuerelektronik 16 über das Kabel 28 mit elektrischer Energie versorgt. Über den Sensor 24 bzw. über mehrere Sensoren 24 kann ein augenblicklicher Betriebszustand der Fahrzeugfederung erfaßt werden. Über den Sollwert-Geber 26 kann z. B. ein Fahrer des Fahrzeuges seinen Wunsch bezüglich der Fahrzeugfederung an die Steuerelektronik 16 übermitteln.

Je nachdem wie der zweite Wandler 10 auf das Federbein 14 einwirkt, erhält man ein Einfedern bzw. Ausfedern des Federbeines.

Die Steuerelektronik 16 kann über die Steuerleitungen 18, 20 ein Übersetzungsverhältnis (i) des ersten Wandlers 6 und/oder des zweiten Wandlers 10 verändern. Das Übersetzungsverhältnis (i) gibt an, wie die mechanische Energie in hydraulische Energie bzw. wie die hydraulische Energie in mechanische Energie umgewandelt wird. Das Übersetzungsverhältnis (i) ist z. B., je nach Definition, groß, wenn eine bestimmte Drehzahl durch den Wandler 6 bzw. 10 in einen großen hydraulischen Förderstrom umgeformt wird und klein, wenn diese Drehzahl einen kleinen Förderstrom zur Folge hat. Das Übersetzungsverhältnis (i) ist, je nach Definition, positiv (+i) bei Förderung in die eine Richtung und negativ (-i) bei Förderung in entgegengesetzter Richtung. Je nach Ausführungsform läßt sich das Übersetzungsverhältnis (i) des ersten Wandlers 6 von einem negativen Wert (-i) über 0 in Richtung eines positiven Wertes (+i) verändern und je nach Ausführungsform kann die Steuerelektronik 16 das Übersetzungsverhältnis

(i) des zweiten Wandlers 10 von einem negativen Wert (-i) über 0 in Richtung eines positiven Wertes (+i) verändern. Je nach Anwendungsfall genügt eine Verstellung von 0 in nur eine Richtung.

Der Wandler 6 und/oder der Wandler 10 kann z. B. eine Hydraulik-Pumpe/Motor-Einheit sein mit einer An-/Abtriebswelle und zwei Anschlüssen als Zu- und Ablaufstellen für ein Druckmedium. Hier kann das Übersetzungsverhältnis (i) verändert werden, indem das spezifische Volumen (g) der Einheit verändert wird. Das spezifische Volumen (q) ist nach allgemeiner Definition dasjenige Druckmedium-Volumen, welches je Umdrehung der An-/Abtriebswelle durch die Pumpe/Motor-Einheit von einem der Anschlüsse zum jeweils anderen Anschluß strömt. Eine der beiden möglichen Strömungsrichtungen wird als positive (+) Richtung bezeichnet und das spezifische Volumen ist positiv (+q). Die entgegengesetzte Strömungsrichtung ist dann negativ (-) und das spezifische Volumen ist negativ (-q).

Es ist möglich, die erfindungsgemäße Fahrzeugfederung so auszuführen, daß das Übersetzungsverhältnis (i) des ersten Wandlers 6 und des zweiten Wandlers 10 veränderbar ist, oder es ist nur das Übersetzungsverhältnis (i) des ersten Wandlers 6 veränderbar und das Übersetzungsverhältnis des zweiten Wandlers ist konstant, oder es ist das Übersetzungsverhältnis (i) des ersten Wandlers 6 konstant und des zweiten Wandlers 10 veränderbar. Ist das Übersetzungsverhältnis (i) des ersten Wandlers 6 veränderbar, dann kann somit das Übersetzungsverhältnis (i) des zweiten Wandlers 10 konstant sein und man kann den zweiten Wandler 10 z. B. in Form eines Hydraulikzylinders ausführen.

In der Figur 2 ist ein erstes Ausführungsbeispiel der in der Figur 1 symbolhaft dargestellten Fahrzeugfederung gezeigt. In allen Figuren sind gleiche oder gleichwirkende Teile mit denselben Bezugszeichen versehen.

In dem ersten Ausführungsbeispiel nach Figur 2 ist der erste Wandler 6 eine Pumpe/Motor-Einheit mit veränderbarem spezifischen Volumen (q). Der zweite Wandler 10 ist ein Hydraulikzylinder und Bestandteil des Federbeines 14. Der Hydraulikzylinder umfaßt einen Zylinder 42 und einen innerhalb des Zylinders 42 verschiebbar angeordneten Kolben 44 mit einer daran befestigten Kolbenstange 46. Der Kolben 44 unterteilt einen Innenraum des Zylinders 42 in eine erste Arbeitskammer 48 und in eine zweite Arbeitskammer 50. Die erste Arbeitskammer 48 ist in der Zeichnung oberhalb des Kolbens 44 und die zweite Arbeitskammer 50 ist in der Zeichnung unterhalb des Kolbens 44 dargestellt. Der Zylinder 42 ist auf der Seite der ersten Arbeitskammer 48 durch eine erste Stirnseite 52 und andererseits durch eine zweite Stirnseite 54 abgeschlossen. Die Kolbenstange 46 führt durch die zweite Arbeitskammer 50 und ragt aus der Stirnseite 54 des Zylinders über den Zylinder 42 hinaus. Die erste Stirnseite 52 des Zylinders 42 ist mit einer ersten Masse 56 und ein aus dem Zylinder 42 hinausragendens Ende der Kolbenstange 46 ist mit einer zweiten Masse 57 verbunden. Die erste Masse 56 ist z. B. ein Fahrzeugaufbau und die zweite Masse 57 ist z. B. ein Radträger mit einem Fahrzeugrad.

Innerhalb des zweiten Arbeitsraumes 50 ist eine Feder 58 angeordnet. Der zweite Arbeitsraum 50 ist hydraulisch über einen zweiten Anschluß 60 und einen Schlauch 65 mit einem hydraulischen Speicher 62 verbunden. Mit Hilfe des Speichers 62 kann innerhalb des zweiten Arbeitsraumes 50 ein mehr oder weniger konstanter Druck aufrechterhalten werden. Der mehr oder weniger konstante Druck im zweiten Arbeitsraum 50 und die Feder 60 haben das Bestreben, die Kolbenstange 46 einzufahren. Je nach Bedarf kann auf die Feder 60 und/oder den Speicher 62 verzichtet werden.

Der erste Arbeitsraum 48 des Zylinders 42 ist über einen ersten Anschluß 59 und durch einen Schlauch 64 hydraulisch mit einem ersten Anschluß 66 der Pumpe/Motor-Einheit 6 verbunden. Der Schlauch 64 ist Bestandteil der hydraulischen Verbindung 8 zwischen dem ersten Wandler 6 und dem zweiten Wandler 10. Ein zweiter Anschluß 68 des ersten Wandlers 6 ist hydraulisch mit einem Tank 70 verbunden.

Der erste Wandler 6 ist über die erste Steuerleitung 18 mit der Steuerelektronik 16 verbunden. Von der Steuerelektronik 16 kann über die Steuerleitung 18 das spezifische Volumen (q) des ersten Wandlers 6 eingestellt werden.

Aus Vereinfachungsgründen wird angenommen, daß die Antriebsmaschine 2 über die erste mechanische Verbindung 4 auf den ersten Wandler 6, d. h. auf die Pumpe/Motor-Einheit mit konstanter Drehzahl einwirkt. Ebenfalls aus Vereinfachungsgründen werden Reibungsverluste außer Betracht gelassen. Der Fachmann weiß, daß bei Reibung nicht mehr nutzbare Wärmeenergie verloren geht.

Ist keine Relativbewegung zwischen den beiden Massen 56, 57 erwünscht, so wird das spezifische Volumen (q) des Wandlers 6 auf Null gestellt.

Soll ein Abstand zwischen den beiden Massen 56, 57 vergrößert werden, so wird das spezifische Volumen (g) auf einen positiven Wert (+q) eingestellt. Die Pumpe/Motor-Einheit saugt nun Druckmedium aus dem Tank 70 und fördert es über den Schlauch 64 der Verbindung 8 in den Hydraulikzylinder. Die Kolbenstange 46 fährt aus. Gleichzeitig wird eine Vorspannung der Feder 58 und des Speichers 62 erhöht.

Wird eine Verkleinerung des Abstandes gewünscht, so wird das spezifische Volumen (q) auf einen negativen Wert (-q) gestellt. Druckmedium fließt nun vom Anschluß 66 durch den Wandler 6 zum Anschluß 68 und zum Tank 70. Dadurch wird über den Anschluß 66, den Schlauch 64, den Anschluß 59 das Druckmedium im ersten Arbeitsraum 48 des Hydraulikzylinders 10 verringert. Wegen einer Gewichtskraft der ersten Masse 56 bzw. wegen der Feder 58 bzw. wegen dem Druck des Speichers 62 wird nun der Abstand der beiden Massen 56, 57 verkleinert.

Durch Verändern des spezifischen Volumens (q) kann eine Ausfahrgeschwindigkeit bzw. Einfahrgeschwindigkeit der Kolbenstange 46 in weiten Grenzen beliebig eingestellt werden, auch bei konstanter Drehzahl der Antriebsmaschine 2.

Während eines Ausfahrhubes erfolgt ein Energiefluß aus der Antriebsmaschine 2 über die erste mechanische Verbindung 4, über den ersten Wandler 6, über die hydraulische Verbindung 8, über den zweiten Wandler 10 zum Federbein 14. Dort wird die Energie in der Feder 58 bzw. im Speicher 62 bzw. als Lage-Energie in der Masse 56 gespeichert.

Beim Einfahrhub wird die in der Masse 56 bzw. in der Feder 58 bzw. im Speicher 62 gespeicherte Energie durch den zweiten Wandler 10 in hydraulische Energie umgeformt und über die hydraulische Verbindung 8 und über die Verbindung 4 an die Antriebsmaschine 2 zurückzugeben. Wegen nie ganz vermeidbarer Reibung an verschiedenen Stellen geht jedoch ein gewisser, häufig ein vernachlässigbar kleiner Teil der Energie als Wärmeenergie verloren.

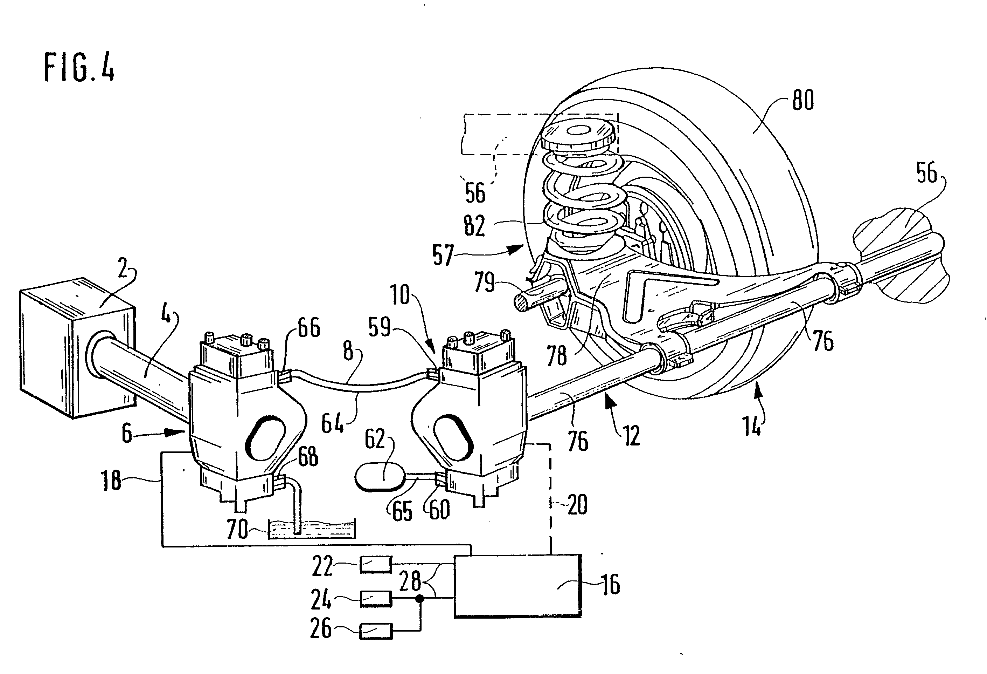

Die Feder 58 und der Speicher 62 bewirken während eines Einfahrhubes, daß die zweite Masse 57 aktiv angehoben werden kann. Während eines Ausfahrhubes können die Feder 58 und der Speicher 62 einer Gewichtskraft, mit der die Masse 57 nach unten zieht, entgegenwirken. Der Fachmann sagt, das Federbein 14 könne in allen vier Quadranten arbeiten. Ein Diagramm mit den vier Quadranten ist in der DE 36 31 876 A1 anhand Figur 4 erläutert.

Falls auf den Speicher 62 verzichtet werden kann, so kann, wie in Figur 3 dargestellt, der zweite Arbeitsraum 50 des zweiten Wandlers 10 über den zweiten Anschluß 60 und über den zweiten Schlauch 65 mit dem Tank 70 verbunden sein. Die Figur 3 zeigt ein weiteres Ausführungsbeispiel, bei dem gegenüber dem Ausführungsbeispiel nach Figur 2 auf die Feder 58 und den Speicher 62 verzichtet wird.

Bei Bedarf kann auch der zweite Anschluß 60 des Hydraulikzylinders (Wandler 10) mit dem zweiten Anschluß 68 des ersten Wandlers 6 verbunden sein, wie z.B. in der Figur 3 gestrichelt dargestellt.

In der Figur 4 ist ein drittes Ausführungsbeispiel dargestellt. Die Fahrzeugfederung dieses Ausführungsbeispiels besteht im wesentlichen aus den gleichen Teilen wie die Fahrzeugfederung der vorhergehenden Ausführungsbeispiele. Im Ausführungsbeispiel nach Figur 4 besteht der zweite Wandler 10 nicht aus einem Hydraulikzylinder sondern aus einer Pumpe/Motor-Einheit.

Der zweite Wandler 10 ist über die zweite mechanische Verbindung 12 mit dem Federbein 14 mechanisch verbunden. Die zweite mechanische Verbindung 12 ist hier eine Welle 76 mit einer Schwinge 78. Die Welle 76 ist an der ersten Masse 56, z. B. dem Fahrzeugaufbau 56 drehbar gelagert. An der Welle 76 ist die Schwinge 78 drehfest gelagert. An einem der Welle 76 abgewandten Ende 79 der Schwinge 78 ist ein Fahrzeugrad 80 drehbar gelagert. Zwischen der ersten Masse 56 und dem der Welle 76 abgewandten Ende 79 der Schwinge 78 kann eine Feder 82 bei Bedarf angeordnet sein. Über die Welle 12 kann ein Energiefluß zwischen dem zweiten Wandler 10 und der Schwinge 78 in beiden Richtungen erfolgen. Die Schwinge 78, die Feder 82 und die Welle 76 sind Bestandteile des Federbeines 14. Das Rad 80 und das Ende 79 der Schwinge 78 bilden die zweite Masse 57.

Der Druck im Speicher 62 sorgt für eine Gegenkraft zu der durch den Druck am ersten Anschluß 59 des zweiten Wandler 10 erzeugten Kraft. Je nach Anwendungsfall kann auf den Speicher 62 verzichtet werden und der zweite Anschluß 60 des zweiten Wandlers 10 kann mit dem Tank 70 verbunden werden, ähnlich wie in Figur 3 dargestellt.

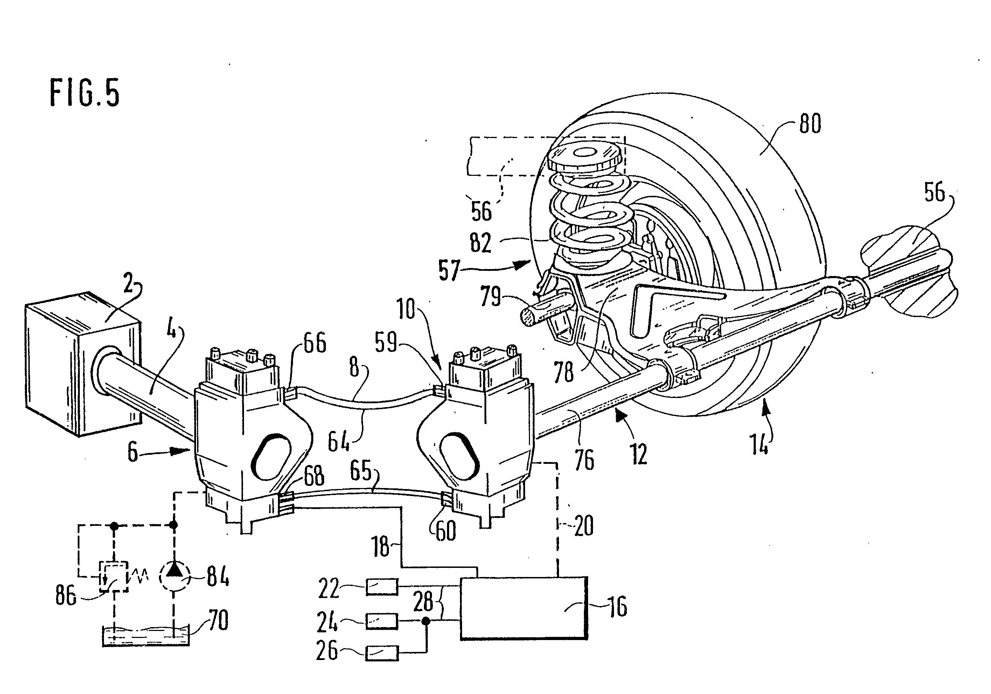

Das dritte Ausführungsbeispiel nach Figur 4 zeigt einen sogenannten offenen Hydraulikkreis. Ein viertes Ausführungsbeispiel nach Figur 5 ist weitgehend gleich aufgebaut wie das dritte Ausführungsbeispiel nach Figur 4. Das vierte Ausführungsbeispiel nach Figur 5 zeigt jedoch einen sogenannten geschlossenen Hydraulikkreis. Im vierten Ausführungsbeispiel besteht die hydraulische Verbindung 8 aus dem Schlauch 64 und aus dem weiteren Schlauch 65. Der Schlauch 64 verbindet den ersten Anschluß 66 des ersten Wandlers 6 mit dem ersten Anschluß 59 des zweiten Wandlers 10. Der zweite Schlauch 65 verbindet den zweiten Anschluß 68 des ersten Wandlers 6 mit dem zweiten Anschluß 60 des zweiten Wandlers 10. Damit kann, je nachdem, ob man durch den Wandler 6 den Druck in dem Schlauch 64 erhöht und in dem Schlauch 65 erniedrigt, oder ob man in dem Schlauch 64 den Druck absenkt und in dem Schlauch 65 erhöht über den zweiten Wandler 10 ein Drehmoment über die zweite mechanische Verbindung 12 auf die Schwinge 78 des Federbeines 14 in beiden Richtungen ausüben.

Zwecks ausreichender Versorgung des geschlossenen Hydraulikkreises ist es zweckmäßig, diesen geschlossenen Hydraulikkreis über eine Speisepumpe 84 aus dem Tank 70 mit Druckmedium zu versorgen. Die Speisepumpe 84 dient nur zum Ersatz von eventuell über Leckage aus dem geschlossenen Hydraulikkreis entwichenes Druckmedium. Die Speisepumpe 84 kann deshalb sehr klein ausgeführt sein und ist darum in der Zeichnung nur gestrichelt dargestellt. Zum Antrieb der Speisepumpe 84 ist nur eine sehr geringe Leistung erforderlich. Die Speisepumpe 84 ist vorzugsweise eine Konstantpumpe. Zur Absicherung des am Ausgang der Speisepumpe 84 anstehenden Speisedruckes ist noch ein Druckbegrenzungsventil 86 erforderlich.

Alle Ausführungsbeispiele arbeiten in etwa in gleicher Weise wie es für das erste Ausführungsbeispiel beschrieben ist.

Ist das spezifische Volumen (q) auch des zweiten Wandlers 10 veränderbar, so kann auch durch entsprechende Ansteuerung des zweiten Wandlers 10 die Richtung und die Geschwindigkeit der Relativbewegung zwischen den beiden Massen 56, 57 verändert werden.

Zur Bestimmung der Relativbewegung der beiden Massen 56, 57 sind keinerlei Steuerventile, z. B. Schalt, Druckregel- oder Drosselventile, zwischen den beiden Wandlern 6, 10 erforderlich. Die Energie gelangt, abgesehen von geringen, unerheblichen Reibungsverlusten, verlustlos von der Antriebsmaschine 2 über die Wandler 6, 10 zum Federbein 14 bzw. vom Federbein 14 über die beiden Wandler 6, 10 zurück zur Antriebsmaschine 2. Fließt beim Einfedern des Federbeines 14 Energie in Richtung der Antriebsmaschine 2, so geschieht dies, indem die erste Pumpe/Motor-Einheit mit einem Drehmoment in Drehrichtung der Antriebsmaschine 2 auf die Antriebsmaschine einwirkt, d. h. beim Einfedern treibt der Wandler 6 die Antriebsmaschine 2. Je nach Ausgestaltung der Antriebsmaschine 2 kann die beim Einfedern zurückfließende Energie bis zum Ausfedern zwichengespeichert werden oder anderweitig verwendet werden.

Die Wandler 6, 10 können verschieden realisiert werden, z. B. als Radialkolbenpumpe, Axialkolbenpumpe, Schrägscheibenpumpe, Flügelzellenpumpe oder dergleichen. Das spezifische Volumen (q) verändert man z. B. durch Ändern einer Exzentrizität, eines Schwenkwinkels usw. Zum Verstellen des spezifischen Volumens (q) sind nur kleine unerhebliche Steuer-Energieströme erforderlich.

Bei den Ausführungsbeispielen nach den Figuren 4 und 5 kann zwischen dem zweiten Wandler 10 und der Welle 76 ein Getriebe zwischengeschaltet werden. Damit kann ein von dem zweiten Wandler 10 aufzubringendes Drehmoment je nach Zweckmäßigkeit beeinflußt werden.

Normalerweise hat jedes Fahrzeug mehrere Fahrzeugräder 80, d. h. mehrere zweite Massen 57. Günstig ist es, für jede zweite Masse 57 eigene Wandler 6, 10 vorzusehen. Gegebenenfalls kann die Antriebsmaschine 2 und der Tank 70 für mehrere erste 6 und mehrere zweite 10 Wandler nur einmal vorhanden sein.

**Ansprüche**

1. Fahrzeugfederung mit einem Federbein, insbesondere für Kraftfahrzeuge, mit einem mit einer Antriebsmaschine verbundenen ersten Wandler und mit einem mit dem Federbein verbundenen zweiten Wandler, wobei der erste Wandler eine mechanische Energie der Antriebsmaschine in eine hydraulische Energie umwandeln kann, und der zweite Wandler kann zumindest einen Teil der hydraulischen Energie in eine mechanische Energie des Federbeines umwandeln, dadurch gekennzeichnet, daß mindestens einer der beiden Wandler (6, 10) mit veränderbarem Übersetzungsverhältnis ausgestattet ist.

2. Fahrzeugfederung mit einem Federbein nach Anspruch 1, dadurch gekennzeichnet, daß das Übersetzungsverhältnis (i) mindestens eines Wandlers (6, 10) sowohl in positiver Richtung als auch in negativer Richtung (-i ... 0 ... +i) veränderbar ist.

3. Fahrzeugfederung mit einem Federbein nach Anspruch 1 oder 2, dadurch gekennzeichnet, daß der erste Wandler (6) eine Pumpe/Motor-Einheit mit in zwei Richtungen veränderbarem spezifischen Volumen (-q ... 0.... +q) ist.

4. Fahrzeugfederung mit einem Federbein nach Anspruch 1 oder 2, dadurch gekennzeichnet, daß der erste Wandler (6) eine Pumpe/Motor-Einheit mit in einer Richtung veränderbarem spezifischen Volumen (q) ist.

5. Fahrzeugfederung mit einem Federbein nach Anspruch 1 bis 4, dadurch gekennzeichnet, daß der zweite Wandler (10) eine Pumpe/Motor-Einheit mit in zwei Richtungen veränderbarem spezifischen Volumen (-q ... 0 ... +q) ist.

6. Fahrzeugfeder mit einem Federbein nach Anspruch 1 bis 4, dadurch gekennzeichnet, daß der zweite Wandler (10) eine Pumpe/Motor-Einheit mit in einer Richtung veränderbarem spezifischen Volumen (q) ist.

7. Fahrzeugfeder mit einem Federbein nach Anspruch 1 bis 4, dadurch gekennzeichnet, daß der zweite Wandler (10) ein Hydraulikzylinder ist.

# FIG.1

# FIG.2

# FIG.3

FIG.4

EP 0 433 606 A1

FIG.5

EP 0 433 606 A1

Europäisches
Patentamt

**EUROPÄISCHER
RECHERCHENBERICHT**

Nummer der Anmeldung

**EP 90 12 0360**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | DE-A-1 480 197 (STARK)<br>* Seite 3, Zeile 19 - Seite 4, Zeile 10; Figur 2 *<br>— — — | 1-4,7,5,6 | B 60 G<br>13/14<br>B 60 K 25/10<br>B 60 G 17/06 |
| Y | HYDRAULICS AND PNEUMATICS. vol. 34, no. 6, Juni 1981, CLEVELAND US Seiten 73 - 76; Beachley: "Hydromechanical transmission saves fuel"<br>* Figur 2 *<br>— — — | 5,6 | |
| A | SAE-Paper 859196 Warrendale, PA, USA Seiten 2491 - 2496; Faust Hagin: "Regenerative braking for city buses"<br>— — — | | |
| A,D | EP-A-0 261 399 (BOSCH)<br>— — — | | |
| A | US-A-3 980 152 (MANOR)<br>— — — — — | | |

| | RECHERCHIERTE SACHGEBIETE (Int. Cl.5) |
|---|---|
| | B 60 G<br>B 60 K<br>B 60 T<br>F 16 F |

Der vorliegende Recherchenbericht wurde für alle Patentansprüche erstellt

| Recherchenort | Abschlußdatum der Recherche | Prüfer |
|---|---|---|
| Den Haag | 27 März 91 | TORSIUS A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument